# EUROPEAN PATENT SPECIFICATION

(11) **EP 3 920 053 B1**
(45) Date of publication and mention of the grant of the patent: **22.03.2023**
(21) Application number: 19917744.5
(22) Date of filing: 01.03.2019
(51) Int. Cl.: G06F 17/10, H04B 3/04, G06F 7/70

(54) **COMPUTATION CIRCUIT, DIGITAL FILTER, TRANSMISSION DEVICE, RELAY DEVICE, SATELLITE, AND COMPUTATION METHOD**
BERECHNUNGSSCHALTUNG, DIGITALER FILTER, ÜBERTRAGUNGSVORRICHTUNG, RELAISVORRICHTUNG, SATELLIT UND BERECHNUNGSVERFAHREN
CIRCUIT DE CALCUL, FILTRE NUMÉRIQUE, DISPOSITIF DE TRANSMISSION, DISPOSITIF DE RELAIS, SATELLITE ET PROCÉDÉ DE CALCUL

(43) Date of publication of application: 08.12.2021
(73) Proprietor: MITSUBISHI ELECTRIC CORPORATION, Chiyoda-ku Tokyo 100-8310 (JP)
(72) Inventor: TANI, Shigenori, Tokyo 100-8310 (JP); HAYAMA, Michiya, Tokyo 100-8310 (JP)
(74) Representative: Pfenning, Meinig & Partner mbB
(86) International application number: PCT/JP2019/008194
(87) International publication number: WO 2020/178917

(56) References cited:
- ICHIHARA HIDEYUKI ET AL: "Compact and Accurate Digital Filters Based on Stochastic Computing", IEEE TRANSACTIONS ON EMERGING TOPICS IN COMPUTING, IEEE, USA, vol. 7, no. 1, 1 January 2019 (2019-01-01) , pages 31-43, XP011712725, DOI: 10.1109/TETC.2016.2608825 [retrieved on 2019-03-01]
- GUPTA P K ET AL: "STOCHASTIC AND DETERMINISTIC COMPUTING DIGITAL FILTERING AND OTHER APPLICATIONS", ASILOMAR CONFERENCE ON SIGNALS, SYSTEMS AND COMPUTERS. PACIFIC GROVE, NOV. 10 - 12, 1986; [ASILOMAR CONFERENCE ON SIGNALS, SYSTEMS AND COMPUTERS], WASHINGTON, IEEE COMP. SOC. PRESS, US, vol. CONF. 20, 1 November 1986 (1986-11-01), pages 159-163, XP000756515,
- WONG MING MING ET AL: "A New Stochastic Inner Product Core Design for Digital FIR Filters", MATEC WEB OF CONFERENCES, vol. 125, 1 January 2017 (2017-01-01), page 05006, XP055869564, DOI: 10.1051/matecconf/201712505006
- WANG RAN ET AL: "Design, evaluation and fault-tolerance analysis of stochastic FIR filters", MICROELECTRONICS RELIABILITY : AN INTERNAT. JOURNAL & WORLD ABSTRACTING SERVICE, vol. 57, 1 February 2016 (2016-02-01), pages 111-127, XP029428627, ISSN: 0026-2714, DOI: 10.1016/J.MICROREL.2015.11.017
- ARMIN ALAGHI ET AL: "Survey of Stochastic Computing", ACM TRANSACTIONS ON EMBEDDED COMPUTING SYSTEMS, ACM, NEW YORK, NY, US, vol. 12, no. 2s, 1 May 2013 (2013-05-01), pages 1-19, XP058018698, ISSN: 1539-9087, DOI: 10.1145/2465787.2465794
- Onizawa, Naoya; Koshita, Shunsuke; Sakamoto, Shuichi; Abe, Masahide; Kawamata, Masayuki; Hanyu, Takahiro: "Hardware Implementation of Stochastic Gammatone Filter", IEICE Technical Report, vol. 116, no. 96 (CAS2016-6 ), 9 June 2016 (2016-06-09), pages 29-34, XP009529717,

## Description

### Field

The present invention relates to an operation circuit, a digital filter, a transmitter, a repeater, an artificial satellite, and an operation method, which are configured or designed to perform a product-sum operation by stochastic arithmetic.

### Background

With an increasing demand for data communication volume, communication infrastructure facilities such as cellular systems and satellite communication systems are required to be able to transmit data at high speed. In addition, since a conventional repeater mounted on an artificial satellite performs frequency-conversion of a signal received by the artificial satellite and transmission of the result to the ground with use of an analog circuit, there has been a problem in that the repeater cannot cope with changes in a communication demand in each region after the artificial satellite is launched. To this end, digital payload type artificial satellites are attracting attention, in which a device such as an application specific integrated circuit (ASIC) or a field programmable gate array (FPGA) is mounted on a repeater and a frequency of a signal to be relayed and a destination of the signal to be relayed are selected in a digital signal processing thereby to improve flexibility.

In devices which are included in repeaters and perform digital signal processing, some soft error such as inversion of a bit value in an internal circuit occurs due to radiation in outer space. For this reason, the devices which are included in repeaters and perform digital signal processing are often devices dedicated to cosmic space with enhanced radiation resistance. On the other hand, devices such as consumer FPGAs which are widely used on the ground have lower radiation resistance than the dedicated devices for cosmic space, but have higher performance and lower cost than the same. Therefore, improved performance and reduction in cost of an artificial satellite can be expected by using consumer FPGAs for devices included in repeaters to perform digital signal processing.

There is stochastic arithmetic as a technique to enhance soft error resistance when the consumer FPGAs are used in cosmic space. In the stochastic arithmetic, a numerical value is represented by a pseudo-random number sequence including 0 and 1. The stochastic computing has a characteristic that even if bits are inverted by radiation in a part of the pseudo-random number sequence, there occur only a slight error level in arithmetic. Furthermore, the stochastic arithmetic has a characteristic that a circuit configuration for addition, multiplication, or the like can be simplified. Non Patent Literature 1 discloses an operation circuit using stochastic computing.

### Citation List

### Non Patent Literature

Non Patent Literature 1: H. Ichihara, T. Sugino, S. Ishii, T. Iwagaki, and T. Inoue, "Compact and Accurate Digital Filters Based on Stochastic Computing", in IEEE Transactions on Emerging Topics in Computing. DOI: 10.1109 /TETC.2016.2608825

### Summary

### Technical Problem

However, in the stochastic computing described in Non Patent Literature 1, a result of computing is stochastic as compared with that of binary arithmetic operation employed in a conventional operation, and therefore, an error level in operation tends to be large. Specifically, there are caused: a conversion error when a numerical value is converted into a pseudo-random number sequence; and an operation error in an operation between pseudo-random number sequences. In particular, in an operation circuit in which weighted addition units are arranged in two or more stages such as that described in Non Patent Literature 1, there has been a problem that operation errors in a plurality of operation processes are accumulated.

The present invention has been made in view of the above circumstances, and an object thereof is to provide an operation circuit capable of reducing an error level in operation in the stochastic computing.

### Solution to Problem

In order to solve the above-mentioned problems and achieve the object, the present invention provides an operation circuit comprising: a data conversion unit to convert data into first data sequences that are pseudo-random number sequences; a coefficient storage unit to store a weighting coefficient that is a value weighted for each of the first data sequences; a coefficient conversion unit to convert the weighting coefficient into a weighting coefficient sequence that is a pseudo-random number sequence; a plurality of first weighted addition units to generate a second data sequence obtained by weighting and adding up the first data sequences with used of the first data sequences and the weighting coefficient sequences; at least one second weighted addition unit to generate a third data sequence obtained by weighting and adding up the second data sequences with use of the second data sequences and the weighting coefficient sequence; and a control unit to select the first data sequences to be inputted to the first weighted addition units such that operation error levels in the first weighted addition units and the second weighted addition unit become smaller than a predetermined value.

### Advantageous Effects of Invention

The operation circuit according to the present invention achieves an advantageous effect that it is possible to reduce an operation error level in operation the stochastic computing.

### Brief Description of Drawings

FIG. 1 is a diagram illustrating an example configuration of a transmitter according to a first embodiment.
FIG. 2 is a diagram illustrating an example configuration of a digital filter according to the first embodiment.
FIG. 3 is a diagram illustrating a configuration of a product-sum operation unit according to the first embodiment.
FIG. 4 is a diagram illustrating a control circuit according to the first embodiment.
FIG. 5 is a first diagram illustrating data inputted and outputted by a weighted addition unit according to the first embodiment.
FIG. 6 is a first diagram illustrating data sequences inputted and outputted by the weighted addition unit according to the first embodiment.
FIG. 7 is a second diagram illustrating data inputted and outputted by a weighted addition unit according to the first embodiment.
FIG. 8 is a second diagram illustrating data sequences inputted and outputted by the weighted addition unit according to the first embodiment.
FIG. 9 is a third diagram illustrating data inputted and outputted by a weighted addition unit according to the first embodiment.
FIG. 10 is a third diagram illustrating data sequences inputted and outputted by the weighted addition unit according to the first embodiment.
FIG. 11 is a flowchart illustrating a flow of determining a data sequence to be outputted to a weighted addition unit according to the first embodiment.
FIG. 12 is a diagram illustrating a configuration of a digital filter according to a second embodiment.
FIG. 13 is a diagram illustrating a configuration of a product-sum operation unit according to the second embodiment.
FIG. 14 is a flowchart illustrating a flow of determining a data sequence to be outputted to the weighted addition unit according to the second embodiment.

### Description of Embodiments

Hereinafter, the operation circuit, the digital filter, the transmitter, the repeater, the artificial satellite, and the operation method according to each embodiment of the present invention will be described in detail with reference to the drawings. The present invention is not necessarily limited by the embodiments.

### First Embodiment.

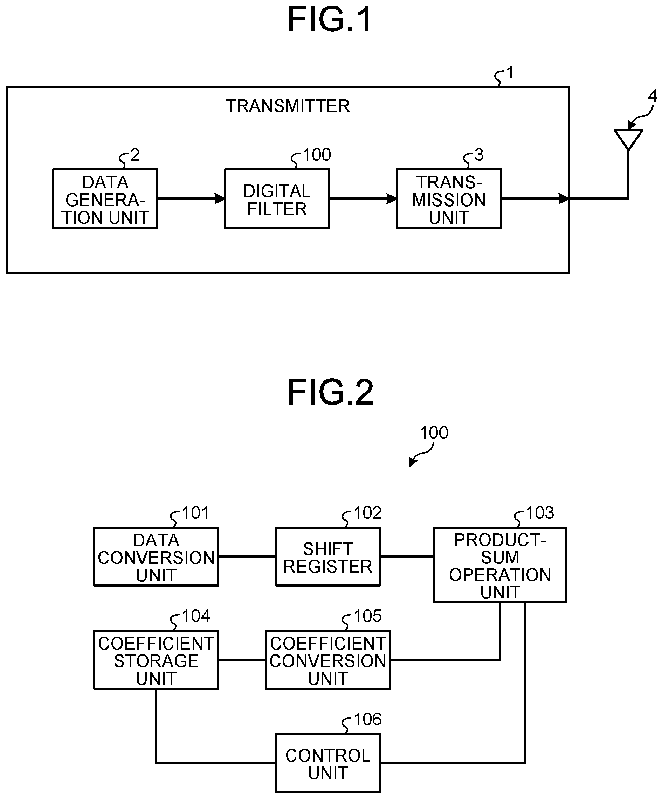

FIG. 1 is a diagram illustrating an example configuration of a transmitter according to a first embodiment. A transmitter 1 communicates with a receiver (not illustrated) over the wireless. The transmitter 1 includes a data generation unit 2, a digital filter 100, a transmission unit 3, and an antenna 4. The data generation unit 2 generates data to be transmitted by the transmitter 1 and outputs the data to the digital filter 100. The digital filter 100 uses the data to perform a product-sum operation to generate transmission data, and outputs the transmission data to the transmission unit 3. The transmission unit 3 performs modulation, D/A conversion, and the like of the transmission data, and converts the transmission data into a radio frequency signal. The antenna 4 transmits the radio frequency signal. The transmitter 1 is equipped in a repeater, an artificial satellite, or the like. Wireless communication requires transmission of radio waves within a limited frequency bandwidth. Therefore, the transmitter 1 performs waveform-shaping of a pulsed signal represented in binary numbers with use of the digital filter 100. Similarly, the repeater performs waveform-shaping of a received signal using the digital filter 100, and then relays the thus-obtained signal to a destination of the retransmission.

FIG. 2 is a diagram illustrating an example configuration of the digital filter according to the first embodiment. The digital filter 100 includes a data conversion unit 101, a shift register 102, a product-sum operation unit 103, a coefficient storage unit 104, a coefficient conversion unit 105, and a control unit 106.

The data conversion unit 101 converts data into a data sequence to be used in stochastic computing. The data has been quantized. Furthermore, the data conversion unit 101 outputs the data sequence to the shift register 102. The data sequence is a pseudo-random number sequence. The data sequence obtained by the conversion of the data conversion unit 101 is also referred to as a first data sequence. Regarding a method of conversion into a data sequence performed by the data conversion unit 101, for example, there is a method in which when a range of values the data can have is between 0 and 1, the data is converted into a data sequence in which probability of occurrence of 1 is the same value as that of the data. Specifically, if the value of the data is 0.5 and the length of the data sequence is 512 bits, the data is converted into a data sequence in which 256 bits out of the 512 bits, that is, 500 of the data sequence is 1, and the remaining 50% is 0. As for a method for generating the pseudo-random number sequence, a pseudo-noise (PN) code may be employed, or a pseudo-random number sequence may be generated with use of a hyper-uniform distribution sequence such as a Sobol sequence. The length of the data sequence is not particularly limited, and the longer the data sequence is set, the more reduced level of errors occurs when data is converted. However, since the longer the data sequence is set, a circuit scale for parallel processing increases, it is satisfactory as long as an appropriate length of the data sequence is selected depending on desired communication performance and circuit scale.

The shift register 102 stores a plurality of data sequences outputted by the data conversion unit 101. The total length of the data sequences stored by the shift register 102 is related to the number of taps of the digital filter 100. For example, in a case where the digital filter 100 is a digital filter with N=11 taps, it is enough for the data sequences to contain 11 pieces of data before conversion. That is, when the length of the data sequence per piece of data is denoted by S, the shift register 102 stores data sequences of which length is S×11. The shift register 102 can store as many data sequences as the taps.

The coefficient storage unit 104 stores weighting coefficients to be used by the product-sum operation unit 103 to weight and add up a plurality of data sequences. In other words, the weighting coefficients are values with which the data sequences are weighted, respectively. In the digital filter 100, the weighting coefficients can be calculated using tap coefficients. A specific example of calculating the weighting coefficients will be described later. The coefficient conversion unit 105 converts the weighting coefficients stored by the coefficient storage unit 104 into weighting coefficient sequences which are pseudo-random number sequences to be used in the stochastic computing. A method of conversion into a weighting coefficient sequence is the same as the processing in which the data conversion unit 101 converts data into a data sequence. The control unit 106 calculates the weighting coefficients. Furthermore, the control unit 106 selects a data sequence to be inputted to the product-sum operation unit 103. A detailed operation of the control unit 106 will be described later.

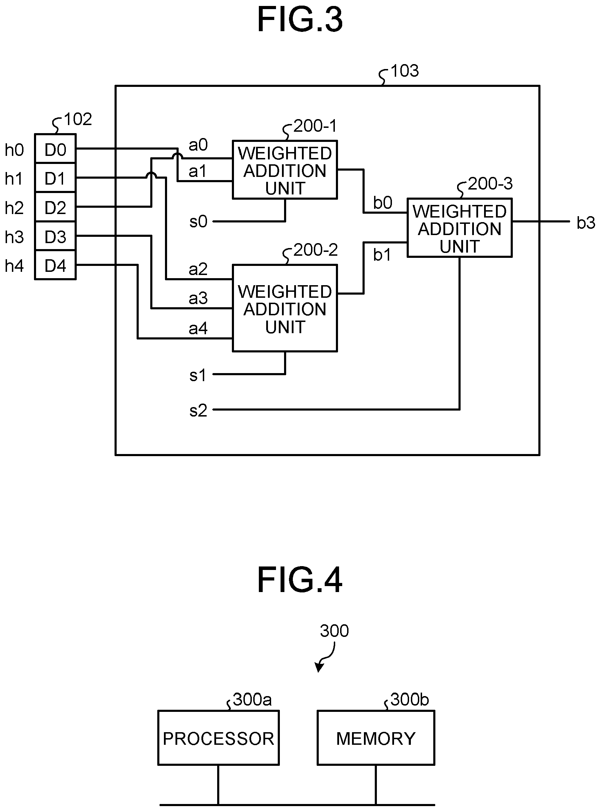

The product-sum operation unit 103 performs a product-sum operation using a data sequence and a weighting coefficient sequence. FIG. 3 is a diagram illustrating a configuration of the product-sum operation unit 103 according to the first embodiment. The product-sum operation unit 103 includes weighted addition units 200-1 to 200-3. When the weighted addition units 200-1 to 200-3 are described without being distinguished from one another, these weighted addition units are each referred to as a weighted addition unit 200. Each of the weighted addition units 200-1 and 200-2 is also called a first weighted addition unit. The weighted addition unit 200-3 is also called a second weighted addition unit. The weighted addition units 200-1 and 200-2 each use a plurality of data sequences stored by the shift register 102 and a plurality of weighting coefficient sequences to generate a data sequence obtained by weighting and adding up the plurality of data sequences, and output the data sequence to the weighted addition unit 200-3. The weighted addition unit 200-3 uses the plurality of data sequences outputted by the weighted addition units 200-1 and 200-2 and a plurality of weighting coefficient sequences to generate a data sequence obtained by weighting and adding up the plurality of data sequences outputted by the weighted addition units 200-1 and 200-2.

Data outputted by the weighted addition unit 200-1 to the weighted addition unit 200-3 is called a data sequence b0. Data outputted by the weighted addition unit 200-2 to the weighted addition unit 200-3 is called a data sequence b1. The data sequences outputted by the weighted addition units 200-1 and 200-2 to the weighted addition unit 200-3 are also called a second data sequence. A data sequence outputted to a functional unit not illustrated in the weighted addition unit 200-3 is also called a third data sequence. The weighted addition units 200-1 to 200-3 are connected in a form of a tree structure. The shift register 102 of FIG. 3 has five taps, and data sequences are stored in five taps D0 to D4, respectively.

Two data sequences are inputted to the weighted addition unit 200-1 from the shift register 102. Three data sequences are inputted to the weighted addition unit 200-2 from the shift register 102. One data sequence is inputted to the weighted addition unit 200-3 from each of the weighted addition unit 200-1 and the weighted addition unit 200-2. A data sequence inputted to the weighted addition unit 200-1 from the tap D2 is called a data sequence a0. A data sequence inputted to the weighted addition unit 200-1 from the tap D0 is called a data sequence a1. A data sequence inputted to the weighted addition unit 200-2 from the tap D1 is called a data sequence a2. A data sequence inputted to the weighted addition unit 200-2 from the tap D3 is called a data sequence a3. A data sequence inputted to the weighted addition unit 200-2 from the tap D4 is called a data sequence a4.

The tap coefficients of the taps D0 to D4 are called tap coefficients h0 to h4, respectively. Furthermore, in FIG. 3, a weighting coefficient sequence calculated using the tap coefficient h0 and the tap coefficient h2 is referred to as a weighting coefficient sequence s0. The weighting coefficient sequence s0 is generated from a weighting coefficient by the coefficient conversion unit 105. The weighting coefficient sequence s0 is inputted to the weighted addition unit 200-1 from the coefficient conversion unit 105. That is, the data sequences a0 and a1 respectively outputted by the taps D2 and D0, and the weighting coefficient sequence s0 calculated using the tap coefficients h2 and h0 of the taps D2 and D0, respectively, are inputted to the weighted addition unit 200-1. Similarly, the data sequences a2, a3, and a4 respectively outputted by the taps D1, D3, and D4, and a weighting coefficient sequence s1 calculated using the tap coefficients h1, h3, and h4 of the taps D1, D3, and D4, respectively, are inputted to the weighted addition unit 200-2. The data sequence b0 and the data sequence b1, and a weighting coefficient sequence s2 calculated by using the tap coefficients h0, h1, h2, h3, and h4 are inputted to the weighted addition unit 200-3.

In the present embodiment, the product-sum operation unit 103 includes three weighted addition units 200, but the number of weighted addition units included therein is not limited to three, and may be four or more. The number of weighted addition units 200 can be changed depending on the number of taps included in the shift register 102, and the number of stages in the tree can also be changed depending on the number of weighted addition units 200. In addition to the tree structure illustrated in FIG. 3, for example, in a case where the number of taps is N=8 and the number of data sequences inputted to one weighted addition unit 200 from the shift register 102 is M=2, a tree structure with three stages can be employed in which the numbers of weighted addition units 200 in their respective stages are four, two, and one toward a top of the tree.

In the present embodiment, the number of data sequences inputted to each of the weighted addition units 200-1 and 200-3 is two, and the number of data sequences inputted to the weighted addition unit 200-2 is three. However, the number of data sequences inputted to each of the weighted addition units 200 from the shift register 102 is not limited to two or three. In other words, the numbers of data sequences inputted to the respective weighted addition units 200-1, 200-2, and 200-3 may be different from one another. Furthermore, in FIG. 3, the data sequence a0 is inputted to the weighted addition unit 200-1 from the tap D2, but the data sequence inputted to the weighted addition unit 200-1 is not limited to the data sequence a0, and a data sequence other than the data sequence a0 may be inputted thereto so that an operational error level in the product-sum operation unit 103 is minimized. Alternatively, a data sequence other than the data sequence a0 may be inputted thereto so that the operational error level in the product-sum operation unit 103 becomes smaller than a predetermined value.

A hardware configuration of the digital filter 100 will be described. The data conversion unit 101, the product-sum operation unit 103, the coefficient storage unit 104, and the coefficient conversion unit 105 are realized by a processing circuit that is an electronic circuitry configured to perform each processing step.

The processing circuitry may be dedicated hardware, or may be a control circuit which includes a memory and a CPU (central processing unit, central arithmetic device) that executes a program stored in the memory. Here, the memory corresponds to a nonvolatile or volatile semiconductor memory such as a random access memory (RAM), a read only memory (ROM), or a flash memory, a magnetic disk, an optical disk, or the like. FIG. 4 is a diagram illustrating a control circuit according to the first embodiment. When the processing circuit is a control circuit including a CPU, the control circuit is, for example, a control circuit 300 configured as illustrated in FIG. 4.

As illustrated in FIG. 4, the control circuit 300 includes a processor 300a that is a CPU and a memory 300b. When the implementation is achieved by the control circuit 300 illustrated in FIG. 4, the implementation is achieved by the processor 300a reading and executing a program corresponding to each of the processings, stored in the memory 300b. The memory 300b is used also as a temporary memory in each processing performed by the processor 300a. The shift register 102 is realized by a digital circuit.

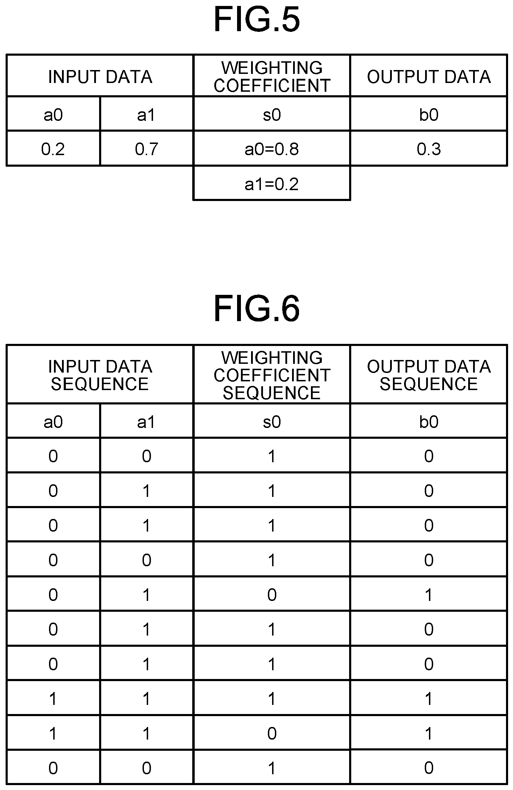

FIG. 5 is a first diagram illustrating data inputted and outputted by the weighted addition unit 200-1 according to the first embodiment. Input data before converted by the data conversion unit 101 into the data sequence a0 is set to 0.2. Input data before converted by the data conversion unit 101 into the data sequence a1 is set to 0.7. Regarding weighting coefficients to be used when calculating the weighting coefficient sequence s0, the weighting coefficients of a0 and a1 are set to 0.8 and 0.2, respectively. The weighting coefficient of a1 represents a content ratio of the data sequence a1 included in the data sequence b0. A value of the data sequence b0 outputted by the weighted addition unit 200-1 before converted into a pseudo-random number is set to 0.3.

FIG. 6 is a first diagram illustrating data sequences inputted and outputted by the weighted addition unit 200-1 according to the first embodiment. Since the input data before converted by the data conversion unit 101 into the data sequence a0 is 0.2, in a case where the sequence length of the data sequence a0 is set to 10 bits, the data sequence a0 is a data sequence in which 2 bits out of 10 bits are set to 1. Similarly, since the input data before converted by the data conversion unit 101 into the data sequence a1 is 0.7, the data sequence a1 is a data sequence in which 7 bits out of 10 bits are set to 1.

Since a weighting coefficient of a0 is 0.8 and a weighting coefficient of a1 is 0.2, the weighting coefficient sequence s0 is a data sequence in which 8 bits out of 10 bits are set to 1. The data sequence b0 is calculated with use of the data sequence a0, the data sequence a1, and the weighting coefficient sequence s0. When an n-th bit of the weighting coefficient sequence s0 is 1, an n-th bit of the data sequence b0 has the same value as an n-th bit of the data sequence a0. On the other hand, when the n-th bit of the weighting coefficient sequence s0 is 0, the n-th bit of the data sequence b0 has the same value as the n-th bit of the data sequence a1. When the data sequences illustrated in FIG. 6 are used, 1<n<11 holds and n is an integer number. In this way, the weighted addition unit 200-1 calculates the data sequence b0 serving as a data sequence in which 0.3(0.2×0.8+0.7×0.2) is used in the stochastic computing, and outputs the data sequence b0 to the weighted addition unit 200-3.

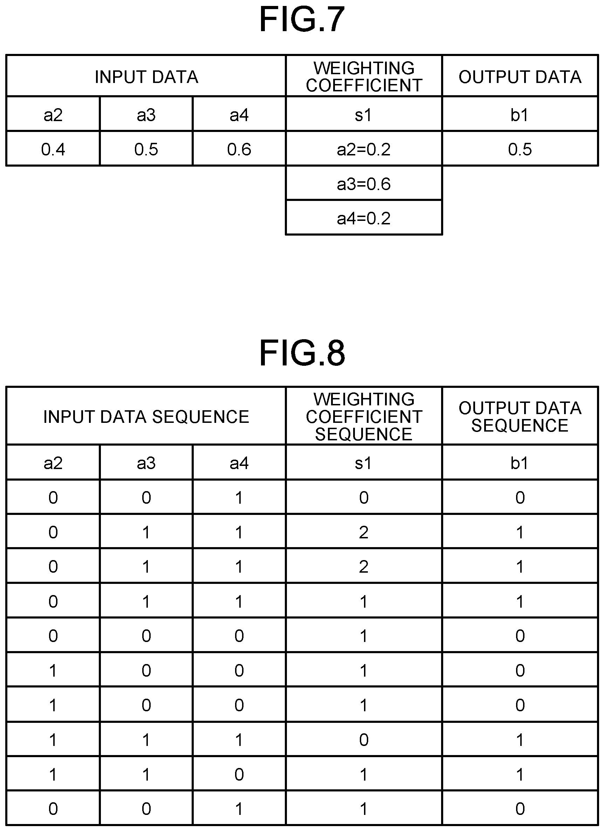

FIG. 7 is a second diagram illustrating data inputted and outputted by the weighted addition unit 200-2 according to the first embodiment. Input data before converted by the data conversion unit 101 into the data sequence a2 is set to 0.4. Input data before converted by the data conversion unit 101 into the data sequence a3 is set to 0.5. Input data before converted by the data conversion unit 101 into the data sequence a4 is set to 0.6. Regarding weighting coefficients to be used when the weighting coefficient sequence s1 is calculated, the weighting coefficients of the data sequences a2, a3, and a4 are set to 0.2, 0.6, and 0.2, respectively. A value of the data sequence b1 outputted by the weighted addition unit 200-2 before converted into a pseudo-random number is set to 0.5.

FIG. 8 is a second diagram illustrating data sequences inputted and outputted by the weighted addition unit 200-2 according to the first embodiment. Since the input data before converted by the data conversion unit 101 into the data sequence a2 is 0.4, in a case where the sequence length of the data sequence a2 is set to 10 bits, the data sequence a2 is a data sequence in which 4 bits out of 10 bits are set to 1. Similarly, since the input data before converted by the data conversion unit 101 into the data sequence a3 is 0.5, the data sequence a3 is a data sequence in which 5 bits out of 10 bits are set to 1. Since the input data before converted by the data conversion unit 101 into the data sequence a4 is 0.6, the data sequence a4 is a data sequence in which 6 bits out of 10 bits are set to 1.

The number of data sequences inputted to the weighted addition unit 200-1 is two, whereas the number of data sequences inputted to the weighted addition unit 200-2 is three. Therefore, the weighting coefficient sequence s1 is represented by three different values, i.e., 0, 1, and 2. That is, the weighting coefficient sequence s1 is represented by a value corresponding to the number of data sequences inputted to the weighted addition unit 200-2. The weighting coefficient of the data sequence a2 is represented by a content ratio of 0 included in the weighting coefficient sequence s1, and 2 bits out of 10 bits of the weighting coefficient sequence s1 are 0. The weighting coefficient of the data sequence a3 is represented by a content ratio of 1 included in the weighting coefficient sequence s1, and 6 bits out of 10 bits of the weighting coefficient sequence s1 are 1. The weighting coefficient of the data sequence a4 is represented by a content ratio of 2 included in the weighting coefficient sequence s1, and 2 bits out of 10 bits of the weighting coefficient sequence s1 are 2.

The data sequence b1 is calculated using the data sequence a2, the data sequence a3, the data sequence a4, and the weighting coefficient sequence s1. When an n-th bit of the weighting coefficient sequence s1 is 0, an n-th bit of the data sequence b1 has the same value as an n-th bit of the data sequence a2. On the other hand, when the n-th bit of the weighting coefficient sequence s1 is 1, the n-th bit of the data sequence b1 has the same value as an n-th bit of the data sequence a3. Then, when the n-th bit of the weighting coefficient sequence s1 is 2, the n-th bit of the data sequence b1 has the same value as an n-th bit of the data sequence a4. When the data sequences illustrated in FIG. 8 are used, 1<n<11 holds and n is an integer number. In this way, the weighted addition unit 200-2 calculates the data sequence b1 serving as a data sequence in which 0.5(0.4×0.2+0.5×0.6+0.6×0.2) is used in the stochastic computing, and outputs the data sequence b1 to the weighted addition unit 200-3.

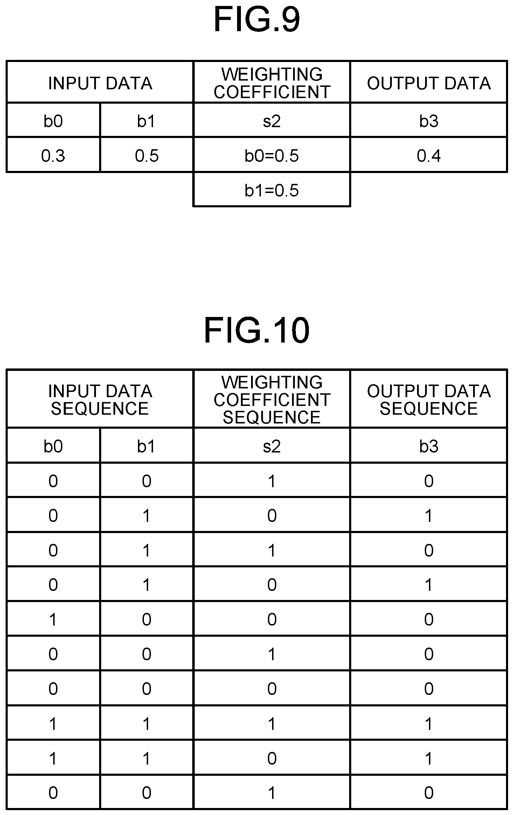

FIG. 9 is a third diagram illustrating data inputted and outputted by the weighted addition unit 200-3 according to the first embodiment. The number of data sequences inputted to the weighted addition unit 200-3 is the same as the number of data sequences inputted to the weighted addition unit 200-1, i.e., two. A value of the data sequence b0 before converted into a pseudo-random number is 0.3. A value of the data sequence b1 before converted into a pseudo-random number is 0.5. Regarding weighting coefficients to be used when the weighting coefficient sequence s2 is calculated, the weighting coefficient of the data sequence b0 is 0.5, and the weighting coefficient of the data sequence b1 is 0.5.

FIG. 10 is a third diagram illustrating data sequences inputted and outputted by the weighted addition unit 200-3 according to the first embodiment. For the data sequence b3 outputted by the weighted addition unit 200-3, a process similar to the process of calculating the data sequence b0 outputted by the weighted addition unit 200-1 is performed, and therefore, details of the process for the data sequence b3 will not be described. The weighted addition unit 200-3 calculates the data sequence b3 serving as a data sequence in which 0.4(0.3×0.5+0.5×0.5) is used in the stochastic computing, and outputs the data sequence b3 to another functional unit (not illustrated). In this way, the product-sum operation unit 103 can realize the product-sum operation based on tree-structured configuration of a plurality of weighted addition units 200 to which a plurality of data sequences are inputted with a tree structure.

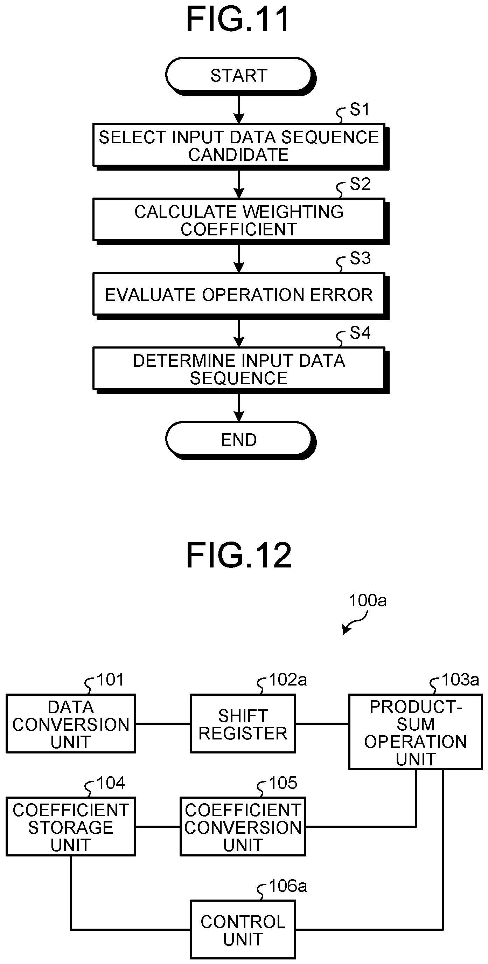

FIG. 11 is a flowchart illustrating a flow of determining a data sequence to be outputted to the weighted addition unit 200 according to the first embodiment. The control unit 106 selects a candidate for a data sequence to be inputted to the weighted addition unit 200 (step S1). In this example, the number of candidates for data sequences to be inputted to weighted addition units 200 on a first stage in the tree structure, that is, the weighted addition unit 200-1 and the weighted addition unit 200-2, is the number N of data sequences stored in the shift register 102.

For example, description is given using the product-sum operation unit 103 illustrated in FIG. 3 as an example. The control unit 106 selects candidates for M=2 data sequences to be inputted to the weighted addition unit 200-1 and candidates for M=3 data sequences to be inputted to the weighted addition unit 200-2. In FIG. 3, the data sequences to be inputted to the weighted addition unit 200-3 that is a weighted addition unit 200 on a stage other than the first stage are the data sequence b0 outputted by the weighted addition unit 200-1 on the first stage and the data sequence b1 outputted by the weighted addition unit 200-2 on the first stage, but in a case where the number of stages of the tree in the tree structure is larger than two, the weighted addition unit 200-3 may select a candidate from the data sequences outputted by the weighted addition units 200 on a stage prior to the weighted addition units 200 on a stage other than the first stage. In other words, in a case where the number of stages of the tree in the tree structure is three, a weighted addition unit on a third stage may select a candidate from data sequences outputted by the weighted addition units on a stage other than the first stage, that is, the weighted addition units on a second stage. In addition, when the control unit 106 selects candidates for data sequences to be inputted to the weighted addition units 200, the number of data sequences to be inputted to the weighted addition units 200 may be changeable, and thereby the candidates for the data sequences to be inputted to the weighted addition units 200 and the number of data sequences to be inputted to the weighted addition units 200 may be optimized.

The control unit 106 calculates a weighting coefficient to be used by the weighted addition unit 200 (step S2). Regarding a calculation method of weighting coefficients, in a case of the digital filter 100, the weighting coefficients can be calculated using the tap coefficients h0 to h4 corresponding to respective taps of the shift register 102. For example, regarding the weighting coefficient for the weighted addition unit 200-1, the weighting coefficient for the data sequence a1 can be calculated as h0/(h0+h2) when the weighting coefficient calculation method described in Non Patent Literature 1 is used.

The control unit 106 evaluates an operation error in the product-sum operation unit 103 (step S3). Regarding an evaluation method of an operation error, for example, the weighting coefficients calculated in step S2 can be used. Since the stochastic computing is a binomial distribution, when a probability that 1 occurs in a data sequence is denoted by p, the variance of p is p(1-p). Therefore, the variance is maximized in a case of p=0.5. In this example, if the weighting coefficient inputted to the weighted addition unit 200 is a constant, for example, a value of 0 or more and 1 or less, the operation error level is maximized in a case where the weighting coefficient is 0.5. Therefore, when the weighting coefficient is denoted by H, the control unit 106 selects a data sequence to be inputted to the weighted addition unit 200 so that H(1-H) is minimized. In a case where the product-sum operation unit 103 is configured based on a plurality of weighted addition units 200, an operation error level in the product-sum operation as a whole can be minimized by selecting a candidate for the data sequence for which a maximum value of H(1-H) is minimized. Furthermore, the control unit 106 may determine a data sequence to be inputted to the weighted addition unit 200 such that a difference between the weighting coefficient and 0 or the weighting coefficient and 1 is minimized.

The control unit 106 repeatedly executes steps S1 to S3, and determines data sequences to be inputted to the weighted addition units 200 such that an operation error level is minimized (step S4). That is, the control unit 106 selects the first data sequences to be inputted to the plurality of first weighted addition units such that operation error levels in the plurality of first weighted addition units and the second weighted addition unit become smaller than a predetermined value. In this example, the number of times of repeated executions may be the number of times until a full search of combinations of the data sequences is completed, or may be the number of times until a sub-optimal solution can be derived with use of any optimization algorithm.

As described above, the digital filter 100 according to the present embodiment selects data sequences to be inputted to the weighted addition units 200 in the process of performing the product-sum operation in the stochastic computing, and determines the data sequences to be inputted to the weighted addition units 200 such that an operation error level in the product-sum operation is minimized. By minimizing the operation error level in the operation performed by the digital filter 100 to improve operation accuracy, it is possible to prevent transmission of erroneous data to a terminal communicating with an artificial satellite on which the digital filter 100 is mounted, and the terminal can prevent a request for retransmitting data, so that the communication performance of the artificial satellite can be improved. In addition, it is possible to use consumer FPGAs with low radiation resistance for space applications, and to improve the communication performance of a transmitter including the consumer FPGA, a repeater including the consumer FPGA, and an artificial satellite on which these components are mounted. In the present embodiment, the operation circuit has been described by using the digital filter as an example, but the operation circuit described in the present embodiment can be used for general integration operations and convolution operations. For example, by applying the operation circuit described in the present embodiment to sound processing, image processing, machine learning, and the like which perform these operations, effects such as reduction in power consumption of a device as a result of simplification of a circuit and improvement of soft error resistance can be achieved.

### Second Embodiment.

In the first embodiment, the method has been revealed in which when the digital filter is constituted with the stochastic computing, inputs to the weighted addition units constituting the product-sum operation are selected such that the operation error level is minimized thereby to improve the operation accuracy of the digital filter. However, the digital filter described in the first embodiment uniquely determines the inputs to the weighted addition units in a design stage thereof. In the present embodiment, a method is provided by which a function equivalent to that in the first embodiment is realized not only in the design stage but also after an operation circuit is mounted on a device such as an FPGA.

FIG. 12 is a diagram illustrating a configuration of a digital filter according to the second embodiment. A digital filter 100a includes the data conversion unit 101, a shift register 102a, a product-sum operation unit 103a, the coefficient storage unit 104, the coefficient conversion unit 105, and a control unit 106a. Constituent elements having the same functions as those in the first embodiment are denoted by the same reference symbols as those in the first embodiment, and redundant descriptions thereof will be omitted. The shift register 102a has six taps.

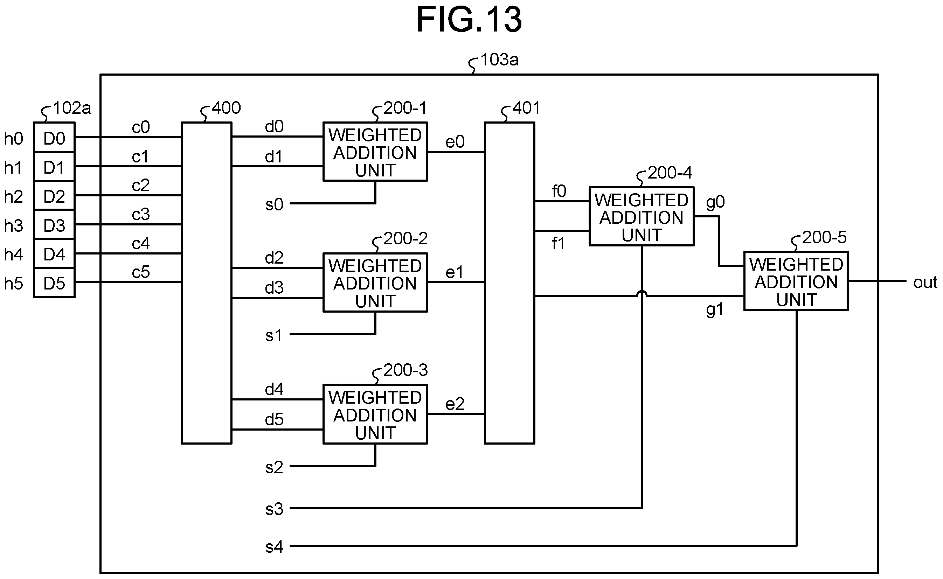

FIG. 13 is a diagram illustrating a configuration of the product-sum operation unit 103a according to the second embodiment. The product-sum operation unit 103a includes weighted addition units 200-1 to 200-5, a first switch 400, and a second switch 401. The weighted addition units 200-1 to 200-5 have the same functions as the weighted addition units 200 of the first embodiment. The product-sum operation unit 103a is different from the product-sum operation unit 103 in that data sequences to be inputted to the weighted addition units 200 can be switched by using the first switch 400 and the second switch 401. In addition to the functions of the control unit 106, the control unit 106a controls the switching of the first switch 400 and the second switch 401.

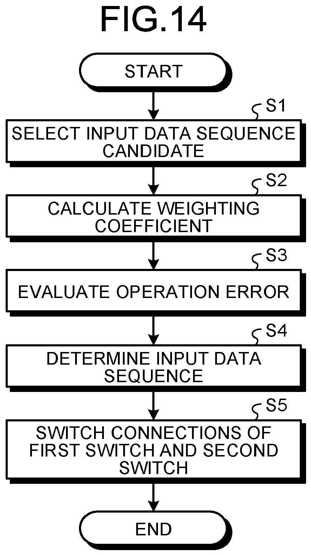

FIG. 14 is a flowchart illustrating a flow of determining a data sequence to be outputted to the weighted addition unit 200 according to the second embodiment. In FIG. 14, steps S1 to S4 are the same as those in FIG. 11. The control unit 106a switches connections of the first switch 400 and the second switch 401 so that the determined data sequence is inputted to the weighted addition unit 200 (step S5).

Regarding the operation error evaluation performed by the control unit 106a, the first embodiment is directed for the control unit 106 to evaluate the operation error using the value of the weighting coefficient, but the present embodiment is limited to this example, and the control unit 106a may generate test data to be inputted to the product-sum operation unit 103a and an expected value in a case of a binary arithmetic that is a product-sum operation without using the stochastic computing, and use, as an operation error, a difference between output "out" when the test data is inputted to the product-sum operation unit 103a and the expected value. The test data is included in data to be inputted to the data conversion unit 101. Furthermore, the control unit 106a may control the switches so that the operation error level is minimized, with use of the difference between the output "out" and the expected value. In other words, the switching of the switches may be controlled depending on a result of the outputs of the weighted addition units 200.

As described above, in the present embodiment, the digital filter 100a is configured to have the first switch 400 and the second switch 401 added to inputs of the weighted addition units constituting the product-sum operation, and to determine input data sequences such that the operation error level is minimized even after the circuit is mounted. Consequently, for example, even when a tap coefficient of the digital filter 100a is changed during operation, the operation error level can be reevaluated and minimized.

The configurations described in the embodiment above are merely examples of the content of the present invention, and can each be combined with other publicly known techniques and partially omitted and/or modified without departing from the scope of the present invention.

### Reference Signs List

1 transmitter; 2 data generation unit; 3 transmission unit; 4 antenna; 100, 100a digital filter; 101 data conversion unit; 102, 102a shift register; 103, 103a product-sum operation unit; 104 coefficient storage unit; 105 coefficient conversion unit; 106, 106a control unit; 200, 200-1 to 200-5 weighted addition unit; 300 control circuit; 300a processor; 300b memory; 400 first switch; 401 second switch.

## Claims

1. An operation circuit comprising:
a data conversion unit (101) to convert data into first data sequences that are pseudo-random number sequences;
a coefficient storage unit (104) to store a weighting coefficient that is a value weighted for each of the first data sequences;
a coefficient conversion unit (105) to convert the weighting coefficient into a weighting coefficient sequence that is a pseudo-random number sequence;
a plurality of first weighted addition units (200-1, 200-2) to generate a second data sequence obtained by weighting and adding up the first data sequences with use of the first data sequences and the weighting coefficient sequences; and
at least one second weighted addition unit (200-3) to generate a third data sequence obtained by weighting and adding up the second data sequences with use of the second data sequences and the weighting coefficient sequence;
**characterised by**
a control unit (106) to select the first data sequences to be inputted to the first weighted addition units (200-1, 200-2) such that operation error levels in the first weighted addition units and the second weighted addition unit become smaller than a predetermined value,
wherein the weighting coefficient has a value of 0 or more and 1 or less, and
the control unit (106) is configured to reduce the operation error level by minimizing a maximum value of a product of a value obtained by subtracting the weighting coefficient from 1 and the weighting coefficient; or the control unit (106) is configured to reduce the operation error level by minimizing a difference between the weighting coefficient and 0.

2. The operation circuit according to claim 1, wherein
the number of the first data sequences inputted to the first weighted addition unit (200-1, 200-2) is different between the first weighted addition units (200-1, 200-2).

3. The operation circuit according to claim 1 or 2, wherein
the weighting coefficient represents a content ratio of the first data sequence included in the second data sequence, and
the weighting coefficient sequence is represented by a value according to the number of the first data sequences inputted to the first weighted addition unit.

4. The operation circuit according to any one of claims 1 to 3, wherein
test data is included in the data, and
the operation error is a difference between a result of the test data obtained by performing a product-sum operation using stochastic computing and a result of the test data obtained by performing a product-sum operation without using stochastic computing.

5. The operation circuit according to any one of claims 1 to 4, comprising:
a switch (400) to switch the first data sequences inputted to the first weighted addition units (200-1, 200-2, 200-3), wherein
the control unit (106a) controls switching of the switch (400).

6. The operation circuit according to claim 5, wherein
the switching is controlled depending on a result of output of the first weighted addition units (200-1, 200-2, 200-3) .

7. A digital filter (100) comprising:
the operation circuit according to any one of claims 1 to 6, wherein
the digital filter is configured to calculate a weighting coefficient to be used by the operation circuit with use of a tap coefficient.

8. A transmitter (1) comprising the operation circuit according to any one of claims 1 to 6.

9. A repeater comprising the operation circuit according to any one of claims 1 to 6.

10. An artificial satellite comprising the operation circuit according to any one of claims 1 to 6.

11. An operation method comprising:
a first step of converting data into first data sequences that are pseudo-random number sequences;
a second step of storing a weighting coefficient that is a value weighted for each of the first data sequences;
a third step of converting the weighting coefficient into a weighting coefficient sequence that is a pseudo-random number sequence;
a plurality of fourth steps of generating a second data sequence obtained by weighting and adding up the first data sequences using the first data sequences and the weighting coefficient sequences;
at least one fifth step of generating a third data sequence obtained by weighting and adding up the second data sequences using the second data sequences and the weighting coefficient sequence; and
a sixth step of selecting the first data sequences to be inputted in the fourth steps such that operation error levels in the fourth steps and the fifth step become smaller than a predetermined value,
wherein the weighting coefficient has a value of 0 or more and 1 or less, and
the control unit (106) is configured to reduce the operation error level by minimizing a maximum value of a product of a value obtained by subtracting the weighting coefficient from 1 and the weighting coefficient; or the control unit (106) is configured to reduce the operation error level by minimizing a difference between the weighting coefficient and 0.

12. A storage medium in which a program configured to control an operation circuit is stored, the program causing the operation circuit to execute:
a first step of converting data into first data sequences that are pseudo-random number sequences;
a second step of storing a weighting coefficient that is a value weighted for each of the first data sequences;
a third step of converting the weighting coefficient into a weighting coefficient sequence that is a pseudo-random number sequence;
a plurality of fourth steps of generating a second data sequence obtained by weighting and adding up the first data sequences using the first data sequences and the weighting coefficient sequences;
at least one fifth step of generating a third data sequence obtained by weighting and adding up the second data sequences using the second data sequences and the weighting coefficient sequence; and
a sixth step of selecting the first data sequences to be inputted in the fourth steps such that operation error levels in the fourth steps and the fifth step become smaller than a predetermined value,
wherein the weighting coefficient has a value of 0 or more and 1 or less, and
the control unit (106) is configured to reduce the operation error level by minimizing a maximum value of a product of a value obtained by subtracting the weighting coefficient from 1 and the weighting coefficient; or the control unit (106) is configured to reduce the operation error level by minimizing a difference between the weighting coefficient and 0.

## Patentansprüche

1. Operationsschaltung, umfassend:
eine Datenkonvertierungseinheit (101), um Daten in erste Datenfolgen, die Pseudozufallszahlenfolgen sind, zu konvertieren;
eine Koeffizientenspeichereinheit (104), um einen Gewichtungskoeffizienten, der ein für jede der ersten Datenfolgen gewichteter Wert ist, zu speichern;
eine Koeffizientenkonvertierungseinheit (105), um den Gewichtungskoeffizienten in eine Gewichtungskoeffizientenfolge, die eine Pseudozufallszahlenfolge ist, zu konvertieren;
eine Vielzahl von ersten gewichteten Additionseinheiten (200-1, 200-2), um eine zweite Datenfolge, die durch Gewichten und Addieren der ersten Datenfolgen erhalten werden unter Verwendung der ersten Datenfolgen und der Gewichtungskoeffizientenfolgen zu generieren; und
zumindest eine zweite gewichtete Additionseinheit (200-3), um eine dritte Datenfolge, die durch Gewichten und Addieren der zweiten Datenfolge erhalten wird, unter Verwendung der zweiten Datenfolgen und der Gewichtungskoeffizientenfolge zu generieren;
**gekennzeichnet durch**
eine Steuereinheit (106), um die ersten Datenfolgen auszuwählen, die in die ersten gewichteten Additionseinheiten (200-1, 200-2) einzugeben sind, so dass Operationsfehlerniveaus in den ersten gewichteten Additionseinheiten und der zweiten gewichteten Additionseinheit kleiner werden als ein vorherbestimmter Wert,
wobei der Gewichtungskoeffizient einen Wert von 0 oder mehr und 1 oder weniger hat, und
die Steuereinheit (106) eingerichtet ist, das Operationsfehlerniveau durch Miniminieren eines Maximalwerts eines Produkts aus einem Wert, der durch Subtrahieren des Gewichtungskoeffizienten von 1 erhalten wird, und dem Gewichtungskoeffizienten zu reduzieren; oder die Steuereinheit (106) eingerichtet ist, das Operationsfehlerniveau durch Minimieren einer Differenz zwischen dem Gewichtungskoeffizienten und 0 zu reduzieren.

2. Operationsschaltung nach Anspruch 1, wobei
die Anzahl der ersten Datenfolgen, die in die erste gewichtete Additionseinheit (200-1, 200-2) eingegeben werden, zwischen den ersten gewichteten Additionseinheiten (200-1, 200-2) unterschiedlich ist.

3. Operationsschaltung nach Anspruch 1 oder 2, wobei
der Gewichtungskoeffizient ein Inhaltsverhältnis der ersten Datenfolge, die in der zweiten Datenfolge enthalten ist, darstellt, und
die Gewichtungskoeffizientenfolge durch einen Wert gemäß der Anzahl der in die erste gewichtete Additionseinheit eingegebenen ersten Datenfolgen dargestellt wird.

4. Operationsschaltung nach einem der Ansprüche 1 bis 3, wobei:
in den Daten Testdaten enthalten sind, und
der Operationsfehler eine Differenz ist zwischen einem Ergebnis der Testdaten, das durch Durchführen einer Produktsummenoperation unter Verwendung stochastischer Berechnungen erhalten wurde, und einem Ergebnis der Testdaten, das durch die Durchführung einer Produktsummenoperation ohne Verwendung stochastischer Berechnungen erhalten wurde.

5. Operationsschaltung nach einem der Ansprüche 1 bis 4, umfassend:
einen Schalter (400), um die ersten in die ersten gewichteten Additionseinheiten (200-1, 200-2, 200-3) eingegebenen Datenfolgen umzuschalten, wobei
die Steuereinheit (106a) Umschalten des Schalters (400) steuert.

6. Operationsschaltung nach Anspruch 5, wobei
das Umschalten in Abhängigkeit von einem Ergebnis der Ausgabe der ersten gewichteten Additionseinheiten (200-1, 200-2, 200-3) gesteuert wird.

7. Digitales Filter (100), umfassend:
die Operationsschaltung nach einem der Ansprüche 1 bis 6, wobei:
das digitale Filter eingerichtet ist, einen Gewichtungskoeffizienten, der von der Operationsschaltung genutzt wird, unter Verwendung eines Abgriffskoeffizienten zu berechnen.

8. Übertrager (1), umfassend die Operationsschaltung nach einem der Ansprüche 1 bis 6.

9. Verstärker, umfassend die Operationsschaltung nach einem der Ansprüche 1 bis 6.

10. Künstlicher Satellit, umfassend die Operationsschaltung nach einem der Ansprüche 1 bis 6.

11. Operationsverfahren, umfassend:
einen ersten Schritt des Konvertierens von Daten in erste Datenfolgen, die Pseudozufallszahlenfolgen sind;
einen zweiten Schritt des Speicherns eines Gewichtungskoeffizienten, der ein für jede der ersten Datenfolgen gewichteter Wert ist;
einen dritten Schritt des Konvertierens des Gewichtungskoeffizienten in eine Gewichtungskoeffizientenfolge, die eine Pseudozufallszahlenfolge ist;
mehrere vierte Schritte des Generierens einer zweiten Datenfolge, die durch Gewichten und Addieren der ersten Datenfolgen erhalten wird, unter Verwendung der ersten Datenfolgen und der Gewichtungskoeffizientenfolgen;
zumindest einen fünften Schritt des Generierens einer dritten Datenfolge, die durch Gewichten und Addieren der zweiten Datenfolgen erhalten wird, unter Verwendung der zweiten Datenfolgen und der Gewichtungskoeffizientenfolge; und
einen sechsten Schritt des Auswählens der ersten Datenfolgen, die in den vierten Schritten einzugeben sind, so dass die Operationsfehlerniveaus in den vierten Schritten und dem fünften Schritt kleiner werden als ein vorherbestimmter Wert,
wobei der Gewichtungskoeffizient einen Wert von 0 oder mehr und 1 oder weniger hat, und
die Steuereinheit (106) eingerichtet ist, das Operationsfehlerniveau durch Miniminieren eines Maximalwerts eines Produkts aus einem Wert, der durch Subtrahieren des Gewichtungskoeffizienten von 1 erhalten wird, und dem Gewichtungskoeffizienten zu reduzieren; oder die Steuereinheit (106) eingerichtet ist, das Operationsfehlerniveau durch Minimieren einer Differenz zwischen dem Gewichtungskoeffizienten und 0 zu reduzieren.

12. Speichermedium, in dem ein Programm gespeichert ist, das eingerichtet ist, eine Operationsschaltung zu steuern, wobei das Programm die Operationsschaltung veranlasst, auszuführen:
einen ersten Schritt des Konvertierens von Daten in erste Datenfolgen, die Pseudozufallszahlenfolgen sind;
einen zweiten Schritt des Speicherns eines Gewichtungskoeffizienten, der ein für jede der ersten Datenfolgen gewichteter Wert ist;
einen dritten Schritt des Konvertierens des Gewichtungskoeffizienten in eine Gewichtungskoeffizientenfolge, die eine Pseudozufallszahlenfolge ist;
mehrere vierte Schritte des Generierens einer zweiten Datenfolge, die durch Gewichten und Addieren der ersten Datenfolgen erhalten wird, unter Verwendung der ersten Datenfolgen und der Gewichtungskoeffizientenfolgen;
zumindest einen fünften Schritt des Generierens einer dritten Datenfolge, die durch Gewichten und Addieren der zweiten Datenfolgen erhalten wird, unter Verwendung der zweiten Datenfolgen und der Gewichtungskoeffizientenfolge; und
einen sechsten Schritt des Auswählens der ersten Datenfolgen, die in den vierten Schritten einzugeben sind, so dass die Operationsfehlerniveaus in den vierten Schritten und dem fünften Schritt kleiner werden als ein vorherbestimmter Wert,
wobei der Gewichtungskoeffizient einen Wert von 0 oder mehr und 1 oder weniger hat, und
die Steuereinheit (106) eingerichtet ist, das Operationsfehlerniveau durch Miniminieren eines Maximalwerts eines Produkts aus einem Wert, der durch Subtrahieren des Gewichtungskoeffizienten von 1 erhalten wird, und dem Gewichtungskoeffizienten zu reduzieren; oder die Steuereinheit (106) eingerichtet ist, das Operationsfehlerniveau durch Minimieren einer Differenz zwischen dem Gewichtungskoeffizienten und 0 zu reduzieren.

## Revendications

1. Circuit d'opérations comprenant :
une unité de conversion de données (101) pour convertir les données en premières séquences de données qui sont des séquences de nombres pseudo-aléatoires ;
une unité de stockage de coefficient (104) pour stocker un coefficient de pondération qui est une valeur pondérée pour chacune des premières séquences de données ;
une unité de conversion de coefficient (105) pour convertir le coefficient de pondération en une séquence de coefficients de pondération qui est une séquence de nombres pseudo-aléatoires ;
une pluralité de premières unités d'addition pondérée (200-1, 200-2) pour générer une deuxième séquence de données obtenue par pondération et addition des premières séquences de données en utilisant les premières séquences de données et les séquences de coefficients de pondération ; et
au moins une deuxième unité d'addition pondérée (200-3) pour générer une troisième séquence de données obtenue par pondération et addition des deuxièmes séquences de données en utilisant les deuxièmes séquences de données et la séquence de coefficients de pondération ;
**caractérisé par**
une unité de commande (106) pour sélectionner les premières séquences de données à entrer dans les premières unités d'addition pondérée (200-1, 200-2) de sorte que les niveaux d'erreur d'opération dans les premières unités d'addition pondérée et la deuxième unité d'addition pondérée deviennent inférieurs à une valeur prédéterminée,
dans laquelle le coefficient de pondération a une valeur de 0 ou plus et de 1 ou moins, et
l'unité de commande (106) est configurée pour réduire le niveau d'erreur d'opération en minimisant une valeur maximale d'un produit d'une valeur obtenue en soustrayant le coefficient de pondération à 1 et du coefficient de pondération ; ou l'unité de commande (106) est configurée pour réduire le niveau d'erreur de fonctionnement en minimisant une différence entre le coefficient de pondération et 0.

2. Circuit d'opérations selon la revendication 1, dans lequel
le nombre des premières séquences de données entrées dans la première unité d'addition pondérée (200-1, 200-2) est différent entre les premières unités d'addition pondérée (200-1, 200-2).

3. Circuit d'opérations selon la revendication 1 ou 2, dans lequel
le coefficient de pondération représente un rapport de contenu de la première séquence de données incluse dans la deuxième séquence de données, et
la séquence de coefficients de pondération est représentée par une valeur en fonction du nombre de premières séquences de données entrées dans la première unité d'addition pondérée.

4. Circuit d'opérations selon l'une quelconque des revendications 1 à 3, dans lequel
des données d'essai sont incluses dans les données, et
l'erreur d'opération est une différence entre un résultat des données d'essai obtenues en effectuant une opération de somme de produits en utilisant le calcul stochastique et un résultat des données d'essai obtenues en effectuant une opération de somme de produits sans utiliser le calcul stochastique.

5. Circuit d'opérations selon l'une quelconque des revendications 1 à 4, comprenant :
un commutateur (400) pour commuter les premières séquences de données entrées dans les premières unités d'addition pondérées (200-1, 200-2, 200-3), dans lequel
l'unité de commande (106a) commande la commutation du commutateur (400).

6. Circuit d'opérations selon la revendication 5, dans lequel
la commutation est commandée en fonction d'un résultat de sortie des premières unités d'addition pondérées (200-1, 200-2, 200-3).

7. Un filtre numérique (100) comprenant :
le circuit d'opérations selon l'une quelconque des revendications 1 à 6, dans lequel
le filtre numérique est configuré pour calculer un coefficient de pondération à utiliser par le circuit d'opérations avec l'utilisation d'un coefficient de prise.

8. Émetteur (1) comprenant le circuit d'opérations selon l'une quelconque des revendications 1 à 6.

9. Répéteur comprenant le circuit d'opérations selon l'une quelconque des revendications 1 à 6.

10. Satellite artificiel comprenant le circuit d'opérations selon l'une quelconque des revendications 1 à 6.

11. Procédé d'opérations comprenant :
une première étape consistant à convertir des données en premières séquences de données qui sont des séquences de nombres pseudo-aléatoires ;
une deuxième étape consistant à stocker un coefficient de pondération qui est une valeur pondérée pour chacune des premières séquences de données ;
une troisième étape consistant à convertir le coefficient de pondération en une séquence de coefficients de pondération qui est une séquence de nombres pseudo-aléatoires ;
une pluralité de quatrièmes étapes consistant à générer une deuxième séquence de données obtenue en pondérant et en additionnant les premières séquences de données en utilisant les premières séquences de données et les séquences de coefficients de pondération ;
au moins une cinquième étape consistant à générer une troisième séquence de données obtenue par pondération et addition des deuxièmes séquences de données en utilisant les deuxièmes séquences de données et la séquence de coefficients de pondération ; et
une sixième étape consistant à sélectionner les premières séquences de données à entrer dans les quatrièmes étapes de sorte que les niveaux d'erreur d'opération dans les quatrièmes étapes et la cinquième étape deviennent inférieurs à une valeur prédéterminée,
dans lequel le coefficient de pondération a une valeur de 0 ou plus et de 1 ou moins, et
l'unité de commande (106) est configurée pour réduire le niveau d'erreur d'opération en minimisant une valeur maximale d'un produit d'une valeur obtenue en soustrayant le coefficient de pondération à 1 et du coefficient de pondération ; ou l'unité de commande (106) est configurée pour réduire le niveau d'erreur de fonctionnement en minimisant une différence entre le coefficient de pondération et 0.

12. Un support de stockage dans lequel est stocké un programme configuré pour commander un circuit d'opérations, le programme amenant le circuit d'opérations à exécuter :
une première étape consistant à convertir des données en premières séquences de données qui sont des séquences de nombres pseudo-aléatoires ;
une deuxième étape consistant à stocker un coefficient de pondération qui est une valeur pondérée pour chacune des premières séquences de données ;
une troisième étape consistant à convertir le coefficient de pondération en une séquence de coefficients de pondération qui est une séquence de nombres pseudo-aléatoires ;
une pluralité de quatrièmes étapes consistant à générer une deuxième séquence de données obtenue en pondérant et en additionnant les premières séquences de données en utilisant les premières séquences de données et les séquences de coefficients de pondération ;
au moins une cinquième étape consistant à générer une troisième séquence de données obtenue par pondération et addition des deuxièmes séquences de données en utilisant les deuxièmes séquences de données et la séquence de coefficients de pondération ; et
une sixième étape consistant à sélectionner les premières séquences de données à entrer dans les quatrièmes étapes de sorte que les niveaux d'erreur d'opération dans les quatrièmes étapes et la cinquième étape deviennent inférieurs à une valeur prédéterminée,
dans lequel le coefficient de pondération a une valeur de 0 ou plus et de 1 ou moins, et
l'unité de commande (106) est configurée pour réduire le niveau d'erreur d'opération en minimisant une valeur maximale d'un produit d'une valeur obtenue en soustrayant le coefficient de pondération à 1 et du coefficient de pondération ; ou l'unité de commande (106) est configurée pour réduire le niveau d'erreur de fonctionnement en minimisant une différence entre le coefficient de pondération et 0.
